# EUROPEAN PATENT SPECIFICATION

(11) **EP 4 568 869 B1**
(45) Date of publication and mention of the grant of the patent: **23.09.2026**
(21) Application number: 23757333.2
(22) Date of filing: 10.08.2023
(51) Int. Cl.: B61L 15/00, B61L 23/06, B61L 27/20, G06V 40/00

(54) **TRAIN DEPOT SAFETY**
SCHIENENFAHRZEUGSICHERHEIT
SÉCURITÉ DE DÉPÔT DE TRAIN

(30) Priority: 11.08.2022 GB 202211778
(43) Date of publication of application: 18.06.2025
(73) Proprietor: Emeg Group Limited, Chesterfield, Derbyshire S41 8NL (GB)
(72) Inventor: SIMMONITE, John Richard, Chesterfield Derbyshire S41 8NL (GB); BURRELL, Timothy Robert, Chesterfield Derbyshire S41 8NL (GB); ASKWITH, Steven, Chesterfield Derbyshire S41 8NL (GB); CALLAGHAN, Tom, Chesterfield Derbyshire S41 8NL (GB); BOSWELL, Daniel, Chesterfield Derbyshire S41 8NL (GB); MCADAM, Alexander, Chesterfield Derbyshire S41 8NL (GB)
(74) Representative: Elkiner, Kaya
(86) International application number: PCT/GB2023/052117
(87) International publication number: WO 2024/033650

(56) References cited:
- EP-A1- 2 942 259
- KR-A- 20100 041 561
- US-B2- 8 952 805

## Description

### Field of the invention

The present invention relates to systems and methods for improving safety within a train depot. In particular, the present invention provides a depot safety system that protects workers from movement of trains within the depot.

### Background to the invention

Train maintenance depots are important facilities for the safe and efficient operation of rail transport. They typically have several rail roads in which trains can be berthed for repairs or maintenance operations such as effluent tank draining, or refuelling. Different roads can be used simultaneously, and the movement of trains into and out from each road must be carefully managed to minimise the risk of worker injury. It is similarly important to manage the whereabouts of every worker.

Responsibility for safety on a particular road normally falls to a designated road operator. Before moving a train into an unoccupied road, the road operator must ensure that the road is clear of workers. The road operator typically activates visual and audio alerts to notify those near to the road that it should be kept clear for incoming and outgoing trains and provides sufficient time to allow workers that may be on the road to move clear. The road operator can then issue a signal to a train driver that the road is prepared for the train to move into it. Once the train has stopped and is berthed in place on the road, the road operator permits workers to move into the road to conduct their operations. When these operations have been concluded, the road operator must again ensure that the road is clear for the train to move out of the road.

Various methods and components are used by the road operator and workers to ensure safety. Notably, worker access to various locations in and around the road is controlled using worker keys which interact with a road control module. Typically, removal of the keys from a road control module locks out certain functions, such as the ability to move a train, until all workers have returned their keys, and so are clear of the road. In alternatives, access control cards may be used instead of keys.

Document KR 2010 0 041 561 A describes a system for protecting a railway line worker using a train operation control system.

This presents various problems to the safe and efficient operation of the train maintenance depot. Keys may be forgotten or lost by workers, delaying road operations, and introducing the cost of replacements. Additionally, workers may share keys, introducing ambiguity as to whether all workers are clear of a road.

It is against this background that the present invention has been conceived.

### Summary of the invention

The invention is defined by the features of the independent claims.

Preferably, the operator unit is configured to receive a log out command, via the UI, for a logging-out worker to be deregistered from working on the rail road associated with the operator unit.

Preferably, and in response to the log out command, the operator unit is configured to enable the biometric reader to obtain biometric data from the logging-out worker. Preferably, the operator unit is configured to transmit a log out request to the worker management module, the log out request including the biometric data of the logging-out worker. Preferably, the operator unit is configured to issue a log out confirmation to the worker via the UI on receipt of an affirmative log out response from the worker management module indicating that the worker is deregistered from working on the rail road associated with the operator unit.

Preferably, the worker management module is configured to receive the log-out request from the operator unit, and using the biometric data included with the log-out request, perform a biometric recognition routine that determines whether the logging-out worker was previously registered to work on the rail road associated with the operator unit. If so: the worker management module may be configured to send an affirmative log out response to the operator unit, and communicate with the list handler to update the list of workers to deregister the logging-out worker from working on the rail road.

The operator unit may be configured to: communicate with the list handler to determine whether all workers in the list of workers are deregistered from working on the rail road associated with the operator unit, and if so enable switching of the at least one movement control device into a unprotecting configuration.

Preferably, the biometric reader of the operator unit comprises a camera. Accordingly, the operator unit may be configured to receive the log in or log out command, and in response enable the camera to capture an image of the logging-in or logging-out worker. The biometric data may comprise facial data derived from the captured image of the logging-in or logging-out worker. The biometric recognition routine may comprise a facial recognition routine.

An encryption function may be applied to the image of the logging-in or logging-out worker to generate the derived facial data. The encryption function may be a one-way function, preventing the ability to obtain the image of the logging-in or logging-out worker from the derived facial data. The facial recognition routine may comprise comparing the facial data of a logging-in or logging-out worker with facial data stored within the authorised worker database.

Preferably, the operator unit is configured to conduct a manager log in, the manager log in enabling worker management functions on the operator unit. Worker management functions may include a worker addition function in which the operator unit is configured to receive a worker addition command, via the UI, for a new worker to be added as an authorised worker for the rail road. In response, the biometric reader may be enabled to obtain biometric data from the new worker. A new worker addition request may be transmitted to the worker management module, the new worker addition request including the obtained biometric data of the new worker. A worker addition confirmation may be issued via the UI on receipt of an affirmative worker addition response from the worker management module indicating that the new worker has been added to the authorised worker database.

The system may comprise a remote management unit. The remote management unit may be configured to interface with at least one of the operator unit, the worker management module, and the list handler to:
add or remove workers from the authorised worker database; and/or
register or deregister workers from the list of workers working on a predetermined rail road.

The least one movement control device for controlling movement of trains along the associated rail road may comprises signals, for signalling to a train operator.

The system may comprise a warning setting in which at least one warning device is activated to notify workers that the system will be switching from a safe setting to an unsafe setting, so that any worker occupying the rail road must clear the rail road.

The at least one movement control device for controlling movement of trains along the associated rail road may comprise an electromechanical derailer. The derailer may be configured to receive instructions from the operator unit to enter into a protecting configuration, and in response shift into a position on the rail road that would derail a passing train. The derailer may be configured to receive instructions from the operator unit to enter into an unprotecting configuration, and in response shift into a position that allows a train to traverse the rail road.

Preferably, the derailer comprises a position sensor to monitor its position relative to the rail road, the derailer being configured to report its position to the operator unit, thereby providing feedback about whether the derailer is in the protecting or the unprotecting configuration. Preferably, the derailer comprises a train presence sensor for detecting the presence of a train passing the derailer when in the unprotecting configuration, the derailer delaying switching to the protecting configuration until the train has been detected by the train presence sensor to have finished passing the derailer.

The system may comprise a depot, or component parts thereof. For example, the system may comprise one or more: rail roads, train presence sensors, train movement sensors, rail switches, walkways, signals and the like.

It will be understood that features recited herein to be preferable are not necessarily essential to one or more aspects of the present invention.

For example, the features of the depot safety system described in relation to the system of the present invention may be provided as part of computer-implemented of the present invention. For example, the method may comprise functions performed by components of the system, such those performed by movement control devices, operator units, worker management modules, list handlers, and others as described herein.

### Brief description of the drawings

In order for the invention to be more readily understood, embodiments of the invention will now be described, by way of example only, with reference to the accompanying drawings in which:
Figure 1 is a schematic overhead view of a train maintenance depot 100 that includes various components of the depot safety system 1 according to an embodiment of the present invention; and
Figure 2 is a schematic block diagram of a depot safety system 1, as deployed within the depot 100 of Figure 1.

### Specific description of the preferred embodiments

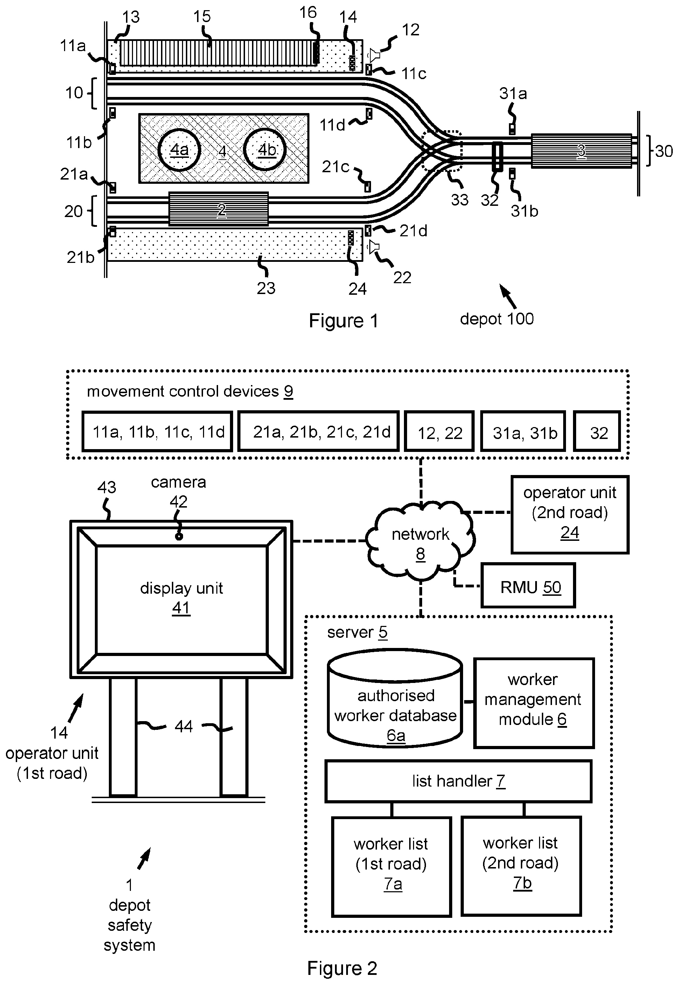

Figure 1 is a schematic overhead view of a train maintenance depot 100. The depot 100 includes various components of the depot safety system 1 of an embodiment of the present invention as will be described.

The depot 100 comprises a first rail road 10, and a second rail road 20. A train can be berthed at each road 10, 20 to have maintenance performed on it using maintenance facilities 4, such as a fuel dispenser 4a and an effluent tank extraction system 4b. This requires workers to traverse the rail roads 10, 20 to engage such facilities with the berthed trains.

The depot also comprises a third rail road 30, and a rail switch 33 which can be operated to connect the third rail road 30 with one of the first and second rail roads 10, 20 as defined by the position of the rail switch 33. In the context of the present invention, the third rail road 30 functionally becomes part of the first or second rail road when so connected.

Figure 1 schematically shows the first rail road 10 without a train, and the second rail road 20 with a berthed train 2. An inbound train 3 on the third rail road 30 can be safely directed to the first rail road 10 as will be described further below.

A first walkway 13 is positioned adjacent to the first rail road 10, and a second walkway 23 is positioned adjacent to the second rail road 20. The walkways 13, 23 define safe regions of the depot 100 that workers can retreat to before and during train movements on the rail roads 10, 20. A raised gantry 15 is provided as an extension of the first walkway 13 access to which is restricted via a gantry access door 16.

For simplicity in explaining embodiment of the invention, only these three rail roads, and their associated components are shown in Figure 1. However, it will be understood the depot 100 normally has many more rail roads, rail switches, and other parts such as dead end cripple lanes, berthings, provisioning buildings, storage, train washing facilities, and the like.

Figure 2 is a schematic block diagram of a depot safety system 1, as deployed within the depot 100 of Figure 1.

The depot safety system 1 comprises a first operator unit 14 associated with the first rail road 10 and a second operator unit 24 associated with the second rail road 20.

The first operator unit 14 comprises a display unit 41, a camera 42, a housing 43 and supports 44. The display unit 41 comprises a resistive touch screen that forms at least part of a user interface (UI) configured to receive inputs and commands from an operator. In alternative embodiments, a different user interface may be provided.

The UI also provides feedback to the operator information about the operation and status of the system 1, for example via graphical elements shown on the screen. The housing 43 surround and protects the display unit 41 from harsh working environments, and the supports 44 secure the operator unit 14 to an appropriate fixed location within the first walkway 13 that provides a relatively clear view of the first rail road 10, and the third rail road 30 that feeds into it.

In the interests of simplicity, only the first operator unit 14 is shown with structural features in Figure 2. However, the second operator unit 24, shown as a block in Figure 2, has the same structural features as described in relation to the first operator unit 14, and is functionally equivalent to it. It is located on the second walkway 23 at a location that provides a relatively clear view of the second rail road 20, and the third rail road 30 that feeds into it. Thus an operator of either the first or second operator unit can perform a relatively reliable visual inspection of the relevant rail roads before initiating train movements thereon.

The operator units 14, 24, are communicative connected via a network 8 to a server 5, and a set of movement control devices 9. For enhanced reliability, the network connection is hardwired in the present embodiment of the invention. However, in alternatives, wireless communications between these components may be used.

The server 5 comprises a worker management module 6, an authorised worker database 6a, a list handler 7, a first work list 7a associated with the first road, and a second worker list 7b associated with the second road.

For increased reliability, the server 5 is a local server, connected via a local area network connection to the operator units 14, 24. However, in alternative embodiments, the server 5 may be implemented as a cloud server accessible via an internet connection. In further alternatives, the server 5, at least in part, may be implemented on one of the operator units 14, 24. Notably, the worker management module 6, the authorised worker database 6a, and the list handler 7, at least in part, may be provided on the operator units 14, 24. Moreover, in alternative embodiments, each operator unit 14, 24 may locally manage its own worker list, for example, with the first worker list 7a being managed by the first operator unit 14, and the second worker list 7b being managed by the second operator unit 24.

The movement control devices 9 include:
a first set of signals 11a, 11b, 11c, 11d, and a first speaker 12, associated with the first rail road 10;
a second set of signals 21a, 21b, 21c, 21d, and a second speaker 22, associated with the second rail road 20; and
a third set of signals 31a, 31b, and a derailer 32 associated with the third rail road 30.

Referring back to Figure 1, each movement control device 9 is generally located on or adjacent to the rail road with which it is associated. The first operator unit 14 is configured for communication with the first set of signals 11a, 11b, 11c, 11d, the first speaker 12, the rail switch 33, the derailer 32 and the third set of signals 31a, 31b. The second operator unit 24 is configured for communication with the second set of signals 21a, 21b, 21c, 21d, the second speaker 22, the rail switch 33, the derailer 32 and the third set of signals 31a, 31b.

Specifically, the operator units 14, 24 can be controlled by an operator to transmit instructions to the relevant movement control devices 9 to switch them between a protecting configuration in which they protect against train movement, and an unprotecting configuration in which they permit train movement along an associated rail road 10, 20, 30. When the movement control devices 9 are in a protecting configuration, the system effectively is in a safe setting in which workers can safely occupy the associated rail road, whereas when the movement control devices 9 are in an unprotecting configuration, the system is in an unsafe setting in which workers must stay clear of the relevant rail road.

Prior to, or during switching of at least one of the movement control devices 9 to the unprotecting configuration, the system further has a warning setting in which at least one warning device is activated to notify workers that the system will be switching from a safe setting to an unsafe setting, so that any worker occupying the rail road must clear the rail road.

For example, the first operator unit 14 can receive an operator input, via the UI, to start the process of allowing movement of the inbound train 3 onto the first rail road 10. Initially, the operator unit 14 communicates with the rail switch 33 to join the third rail road 30 to the first rail road 10. Subsequently, a safety check is performed in that the first operator unit 14 communicates with the server 5 to determine if any workers are registered to be working on the first rail road 10. Specifically, the list handler 7 queries the worker list 7a associated with the first rail road 10. If all workers on the list are deregistered from working on the first rail road 10, the server 5 permits the first operator unit 14 to switch the movement control devices 9 from a protecting configuration to an unprotecting configuration.

The switch does not necessarily occur immediately, but rather in stages with a sufficient delay to allow the movement control device 9 to complete their operations in order, and to notify workers in the vicinity of the first and third rail roads 10, 30 of the imminent movement of the inbound train 3. Naturally, a train operator is also provided with notice of the need to initiate a train movement.

In particular, in an initial stage of switching movement control devices 9 to the unprotecting configuration, the operator unit 14 transmits instructions to the first speaker 12 to active it as a warning device. In doing so, the first speaker 12 issues an audible warning to workers on the first rail road 10 that a train will soon be moving across the first rail road 10.

During the initial stage of switching movement control devices 9 to the unprotecting configuration, the operator unit 14 also transmits instructions to the derailer 32 so the derailer shifts into a position relative to the third rail road 30 such that it allows the inbound train 3 to traverse the derailer 32 unimpeded during movement from the third rail road 30 to the first rail road 10.

In the protecting configuration, the derailer 32 would derail the inbound train 3. As switching to the unprotecting configuration is not necessarily instantaneous, a delay is allocated to allow the derailer 32 to complete its movement. Moreover, in the present embodiment, the derailer 32 comprises a position sensor that monitors the position of the derailer 32 relative to the third rail road 30. This is reported to operator units 14, 24 thereby providing them with feedback about whether the derailer 32 is correctly in the protecting or unprotecting configuration. This ensures that a fault with the derailer 32, for example causing it to become stuck in or between positions, is detectable by operator units 14, 24. This allows appropriate remedial action to be taken, such as aborting later stages of switching movement control devices 9 to the unprotecting configuration, preventing a train movement, and issuing a notification signalling the fault of the derailer 32.

Additionally, the derailer 32 comprises a train presence sensor for detecting the presence of a train passing the derailer 32 when in the unprotecting configuration. This allows the derailer 32 itself to prevent accidental derailment of a train in the case that a train has not fully passed the derailer 32. This may occur if an operator unit 14, 24 issues an early signal to switch the derailer 32 to the protecting configuration before the train has fully passed it. The train presence sensor of the derailer ensures that the derailer 32 can delay switching to the protecting configuration until the train has been detected by the train presence sensor to have completely finished passing the derailer 32.

After a suitable delay has been allowed for workers to be warned to clear the first rail road 10, and the derailer 32 is detected to be successfully in the unprotecting configuration, the first operator unit 14 switches the third set signals 31a, 31b of the third rail road 10, 30 to an unprotecting configuration. Additionally, a pair of the first set of signals 11c, 11d of the first rail road 10 that are proximal to the third rail road are also switched to the unprotecting configuration. Specifically, the colour of light, and configuration of these signals indicate to a train operator that the train should be moved from the third rail road 30 to the first rail road 10. Another pair of the first set of signals 11c, 11d of the first rail road 10 that are distal from the third rail road may remain in the protecting configuration, indicating to a train operator that the train should not move along the first rail road 10 beyond that other pair of signals 11c, 11d.

When the inbound train 3 has moved to the first rail road 10, and has stopped completely, the system may be switched back from the unsafe setting to the safe setting, whereby workers can approach the first rail road 10 to carry out maintenance on the previously inbound train 3 now berthed at the first rail road 10.

To verify that the train 3 is at the correct location, and has completely stopped, the system 1 may comprise train position and/or movement sensors - for example, integrated with or extensions of the movement control devices 9. This ensures that workers are notified to keep off the rail road 10, for example via maintaining audible warnings via speaker 12, 22 of the relevant rail road 10, 20.

Assuming the system is in a safe configuration for a particular rail road 10, 20, workers can approach the associated operator unit 14, 24 to log in as working on the relevant rail road 10, 20.

In the case of workers logging in to work on the first rail road 10, the first operator unit 14 is configured to receive a log in command via the UI shown on the display unit 41. The UI presents a user-interactable virtual log-in button which, when activated by a worker via the touchscreen, enables the camera to serve as a biometric reader of the logging-in worker. Moreover, the camera is enabled to capture an image of the logging-in worker, the image being processed by the operator unit 14 to derive from it biometric data in the form of facial data. Once the image is capture, the camera is deactivated.

The operator unit 14 then transmits a log in request to the server 5, the log in request including the biometric facial data. Implicitly, the log in request also specifies that it is the first rail road 10 that is the subject of the log in request.

The log in request is processed by the worker management module 6 of the server 5 to determine whether the logging-in user is authorised to work on the first rail road 10. Using the biometric facial data included with the log-in request, the worker management module performs a facial recognition routine that determines who the worker is.

In the present embodiment, the facial recognition routine is performed within the server, with the facial data included with the log-in request being compared with facial data stored within the authorised worker database to determine a match. However, in alternatives, the worker management module 6 may utilise a third-party facial recognition service to determine the match.

In any case, the worker management module 6 queries the authorised worker database 6a to determine whether the logging-in worker is authorised to work on the first rail road 10. Assuming the logging-in worker is authorised, the worker management module 6 sends an affirmative log in response to the operator unit 14. Additionally, the worker management module 6 communicates with the list handler 7 to update the worker list 7a associated with the first road 10 to register the logging-in worker as working on the first rail road 10.

The first operator unit 14 receives the affirmative log in response from the worker management module 6 indicating that the worker is authorised and registered to work on the rail road, and in response issues a log in confirmation to the worker via the UI of the first operator unit 14.

Additionally, upon receiving the affirmative log in response, the operator unit 14 may also grant access to regions of the depot 100. For example, access to the raised gantry 15 may be granted to authorised workers via the deactivation of an electromechanical lock employed on the gantry access door 16.

A similar process occurs when workers activate a log in command at the second operator unit 24 associated with the second rail road 20. Again, the authorised worker database 6a is checked to determine that the worker is authorised to work on the second rail road 20, and if so, an affirmative log in response is sent to the second operator unit 24 allowing the worker to receive confirmation via the UI of the second operator unit 24. In this case, the list handler 7 updates the work list 7b associated with the second road 20 to register the logging-in worker as working on the second rail road 20.

Advantageously, this arrangement ensures that only workers that are authorised to work on a particular rail road 10, 20 and/or access a particular region of the depot 100, are permitted to do so. Moreover, workers cannot share nor unintentionally lose access rights, because the use of biometric authentication obviates the need for access keys or cards. Additionally, the use of biometrics ensures that that workers cannot be accidentally logged out of working on a particular rail road, which would otherwise expose them to danger.

To illustrate this, and by way of an extension to the above example, the first operator unit 14 is also configured to receive a log out command, via the UI, for a logging-out worker to be deregistered from working on the rail road associated with the first operator unit 14. The camera is enabled as before, and facial data is obtained from the image of the logging-out worker. The operator unit 14 then transmits a log out request to the worker management module 6, the log out request including the biometric facial data of the logging-out worker.

The worker management module 6 is configured to receive the log-out request from the first operator unit, and using the biometric facial data included with the log-out request, perform a facial recognition routine that determines whether the logging-out worker was previously registered to work on the first rail road 10. Assuming so, an affirmative log out response is sent to the first operator unit 14, and the worker management module communicates with the list handler 7 to update the worker list 7a associated with the first road 10 to deregister the logging-out worker from working on the rail road. The operator unit 14 issues a log out confirmation to the worker via the UI on receipt of the affirmative log out response from the worker management module. Thus, the UI indicates to the logging-out worker that the worker is deregistered from working on the rail road associated with the first operator unit 14.

To preserve worker privacy and data integrity, an encryption function is applied to the captured image of the worker, the encryption function being a one-way function. The one-way function ensures that facial data cannot be reverse engineered to obtain the source image of the worker. However, the facial data retains sufficient correspondence with the source image to allow unambiguous matching of the facial data derived from image captured by the operator units 14, 24, with that stored in the authorised worker database 6a, even if different source images are used. One way this can be implemented is via a signature generator which converts captured image into a set of vectors, for example represented by a hexadecimal string. A high level of correspondence between the set of vectors correlate with a high level of correspondence between the faces in the source images.

As described, the operator units 14, 24 are configured for log in and log out of workers to work on an associated rail road 10, 20, and also when all workers are deregistered from working on a particular rail road 10, 20, the operator units 14, 24 allow instructions to be transmitted to warning 12, 22 and movement control devices 9. The operator units 14, 24 are further configured to provide additional functions via which worker authorisations and registrations are managed. Specifically, the operator units 14, 24 are configured to conduct a manager log in, the manager log in enabling worker management functions on the operator unit, including a worker addition function.

The worker addition function configures a given operator unit 14, 24 to receive a worker addition command, via the UI, that indicates that a new worker is to be added as an authorised worker for a rail road 10, 20 associated with the respective operator unit 14, 24. In response to the worker addition command, the operator unit 14, 24 enables the camera 42 to obtain biometric facial data from the new worker. Additional worker details, such as the name and authorisation level of the new worker is also obtained via suitable prompts issued by the UI. The operator unit 14, 24 is then configured to transmit a new worker addition request to the worker management module, the new worker addition request including the obtained biometric facial data of the new worker, and the additional worker details. The operator unit 14, 24 is then configured to issue a worker addition confirmation via the UI on receipt of an affirmative worker addition response from the worker management module 6 indicating that the new worker has been added to the authorised worker database.

This allows new workers to be added to the authorised worker database 6a directly from the operator units 14, 24, effectively from the depot floor itself. However, it can be desirable to set up authorised workers in advance and/or remote from the depot 100, as well as perform other management functions. To this end, the system comprises a remote management unit 50. The remote management unit is configured to interface with the operator units 14, 24, the worker management module 6, and/or the list handler 7, depending on the management function to be performed. In particular, the remote management unit interfaces with these components to add or remove workers from the authorised worker database and/or register or deregister workers from the list of workers working on a predetermined rail road 10, 20. In certain embodiments, the remote management unit 50 may be part of the server 5.

Further alternative will be apparent to those skilled in the art. Thus, it is intended to embrace all such alternatives, modifications and variations that fall within the scope of the appended claims.

## Claims

1. A safety system for a train depot, the safety system comprising:
an operator unit comprising a biometric reader and a user interface (UI), the operator unit being associated with a respective predetermined rail road of the train depot, and is configured for communication with at least one movement control device for controlling movement of trains along the associated rail road;
a worker management module comprising an authorised worker database;
and
a list handler configured to maintain a list of workers registered to work on the rail road;
wherein the system comprises:
a safe setting in which workers can safely occupy the rail road, the operator unit transmitting instructions to the at least one movement control device to place it into a protecting configuration in which it protects against train movement along the railroad; and
an unsafe setting in which workers must stay clear of the rail road, the operator unit transmitting instructions to the at least one movement control device to place it into a unprotecting configuration in which it permits train movement along the railroad;
wherein the operator unit is configured to:
receive a log in command, via the UI, for a logging-in worker to be registered to work on the rail road associated with the operator unit, and in response enable the biometric reader to obtain biometric data from the logging-in worker;
transmit a log in request to the worker management module, the log in request including the obtained biometric data; and
issue a log in confirmation to the worker via the UI on receipt of an affirmative log in response from the worker management module indicating that the worker is authorised and registered to work on the rail road;
wherein the worker management module is configured to:
receive the log-in request from the operator unit;
using the biometric data included with the log-in request, perform a biometric recognition routine that determines whether the logging-in worker is identified in the authorised worker database as being authorised to work on the rail road associated with the operator unit, and if so:
send an affirmative log in response to the operator unit; and
communicate with the list handler to update the list of workers to
register the logging-in worker as working on the rail road; and
wherein the system is prevented from switching away from the safe setting unless all workers in the list of workers are deregistered from working on the rail road.

2. The system of claim 1, wherein:
the operator unit is further configured to:
receive a log out command, via the UI, for a logging-out worker to be deregistered from working on the rail road associated with the operator unit, and in response enable the biometric reader to obtain biometric data from the logging-out worker;
transmit a log out request to the worker management module, the log out request including the biometric data of the logging-out worker; and
issue a log out confirmation to the worker via the UI on receipt of an affirmative log out response from the worker management module indicating that the worker is deregistered from working on the rail road associated with the operator unit; and wherein:
the worker management module is further configured to:
receive the log-out request from the operator unit;
using the biometric data included with the log-out request, perform a biometric recognition routine that determines whether the logging-out worker was previously registered to work on the rail road associated with the operator unit, and if so: send an affirmative log out response to the operator unit, and communicate with the list handler to update the list of workers to deregister the logging-out worker from working on the rail road.

3. The system of claim 1 or claim 2, wherein the operator unit is configured to:
communicate with the list handler to determine whether all workers in the list of workers are deregistered from working on the rail road associated with the operator unit, and if so enable switching of the at least one movement control device into a unprotecting configuration.

4. The system of any preceding claim, wherein:
the biometric reader of the operator unit comprises a camera;
the operator unit being configured to receive the log in or log out command, and in response enable the camera to capture an image of the logging-in or logging-out worker;
the biometric data comprising facial data derived from the captured image of the logging-in or logging-out worker; and
the biometric recognition routine comprising a facial recognition routine.

5. The system of claim 4, wherein an encryption function is applied to the image of the logging-in or logging-out worker to generate the derived facial data.

6. The system of claim 5, wherein the encryption function is a one-way function, preventing the ability to obtain the image of the logging-in or logging-out worker from the derived facial data.

7. The system of any one of claims 4 to 6, wherein the facial recognition routine comprises comparing the facial data of a logging-in or logging-out worker with facial data stored within the authorised worker database.

8. The system of any preceding claim, wherein the operator unit is configured to conduct a manager log in, the manager log in enabling worker management functions on the operator unit, including a worker addition function in which:
the operator unit is configured to receive a worker addition command, via the UI, for a new worker to be added as an authorised worker for the rail road, and in response enable the biometric reader to obtain biometric data from the new worker;
transmit a new worker addition request to the worker management module, the new worker addition request including the obtained biometric data of the new worker; and
issue a worker addition confirmation via the UI on receipt of an affirmative worker addition response from the worker management module indicating that the new worker has been added to the authorised worker database.

9. The system of any preceding claim, further comprising a remote management unit, the remote management unit configured to interface with at least one of the operator unit, the worker management module, and the list handler to:
add or remove workers from the authorised worker database; and/or
register or deregister workers from the list of workers working on a predetermined rail road.

10. The system of any preceding claim, wherein the least one movement control device for controlling movement of trains along the associated rail road comprises signals, for signalling to a train operator.

11. The system of any preceding claim, wherein the system comprises a warning setting in which at least one warning device is activated to notify workers that the system will be switching from a safe setting to an unsafe setting, so that any worker occupying the rail road must clear the rail road.

12. The system of any preceding claim, wherein the at least one movement control device for controlling movement of trains along the associated rail road comprises an electromechanical derailer, the derailer configured to:
receive instructions from the operator unit to enter into a protecting configuration, and in response shift into a position on the rail road that would derail a passing train; and
receive instructions from the operator unit to enter into an unprotecting configuration, and in response shift into a position that allows a train to traverse the rail road.

13. The system of claim 12, wherein the derailer comprises a position sensor to monitor its position relative to the rail road, the derailer being configured to report its position to the operator unit, thereby providing feedback about whether the derailer is in the protecting or the unprotecting configuration.

14. The system of claim 12 or claim 13, wherein the derailer comprises a train presence sensor for detecting the presence of a train passing the derailer when in the unprotecting configuration, the derailer delaying switching to the protecting configuration until the train has been detected by the train presence sensor to have finished passing the derailer.

15. A computer-implemented method of improving the safety of a train depot, comprising:
receiving a log in command for a logging-in worker to be registered to work on a rail road, and in response enable a biometric reader to obtain biometric data from the logging-in worker;
performing a biometric recognition routine that determines whether the logging-in worker is authorised to work on the rail road, and if so updating a list of workers to register the logging-in worker as working on the rail road; and
preventing switching away from a safe setting unless all workers in the list of workers are deregistered from working on the rail road, the safe setting placing at least one movement control device into a protecting configuration in which it protects against train movement along the railroad.

## Patentansprüche

1. Sicherheitssystem für ein Zugdepot, wobei das Sicherheitssystem Folgendes umfasst:
eine Bedienereinheit, die einen biometrischen Leser und eine Benutzerschnittstelle (UI) umfasst, wobei die Bedienereinheit einem jeweiligen vorbestimmten Gleis des Zugdepots zugeordnet und zur Kommunikation mit mindestens einer Bewegungssteuervorrichtung zur Steuerung der Bewegung von Zügen entlang des zugeordneten Gleises eingerichtet ist;
ein Arbeitermanagementmodul, das eine Datenbank autorisierter Arbeiter umfasst; und
eine Listenverwaltungseinrichtung, die dazu eingerichtet ist, eine Liste der für Arbeiten auf dem Gleis registrierten Arbeiter zu führen;
wobei das System Folgendes umfasst:
eine sichere Einstellung, in der sich Arbeiter sicher auf dem Gleis aufhalten können, wobei die Bedienereinheit Anweisungen an die mindestens eine Bewegungssteuervorrichtung übermittelt, um diese in eine Sicherungskonfiguration zu versetzen, in der sie vor Zugbewegungen entlang des Gleises schützt; und
eine unsichere Einstellung, in der sich Arbeiter von dem Gleis fernhalten müssen, wobei die Bedienereinheit Anweisungen an die mindestens eine Bewegungssteuervorrichtung übermittelt, um diese in eine nicht sichernde Konfiguration zu versetzen, in der sie Zugbewegungen entlang des Gleises zulässt.
wobei die Bedienereinheit dazu eingerichtet ist:
über die Benutzerschnittstelle (UI) einen Anmeldebefehl für einen sich anmeldenden Arbeiter zu empfangen, damit dieser für Arbeiten auf dem der Bedienereinheit zugeordneten Gleis registriert wird, und als Reaktion darauf den biometrischen Leser zu aktivieren, um biometrische Daten des sich anmeldenden Arbeiters zu erfassen;
eine Anmeldeanfrage an das Arbeitermanagementmodul zu übermitteln, wobei die Anmeldeanfrage die erfassten biometrischen Daten enthält; und
dem Arbeiter über die Benutzerschnittstelle (UI) eine Anmeldebestätigung auszugeben, wenn von dem Arbeitermanagementmodul eine positive Anmeldeantwort empfangen wird, die angibt, dass der Arbeiter zur Arbeit auf dem Gleis autorisiert und dafür registriert ist;
wobei das Arbeitermanagementmodul dazu eingerichtet ist:
die Anmeldeanfrage von der Bedienereinheit zu empfangen;
unter Verwendung der in der Anmeldeanfrage enthaltenen biometrischen Daten eine biometrische Erkennungsroutine durchzuführen, durch die bestimmt wird, ob der sich anmeldende Arbeiter in der Datenbank autorisierter Arbeiter als zur Arbeit auf dem der Bedienereinheit zugeordneten Gleis autorisiert identifiziert ist, und, falls dies der Fall ist:
eine positive Anmeldeantwort an die Bedienereinheit zu senden;
und
mit der Listenverwaltungseinrichtung zu kommunizieren, um die Liste der Arbeiter zu aktualisieren und den sich anmeldenden Arbeiter als auf dem Gleis arbeitend zu registrieren; und
wobei verhindert wird, dass das System aus der sicheren Einstellung umgeschaltet wird, solange nicht alle in der Liste der Arbeiter aufgeführten Arbeiter von der Arbeit auf dem Gleis abgemeldet sind.

2. System nach Anspruch 1, wobei:
die Bedienereinheit ferner dazu eingerichtet ist:
über die Benutzerschnittstelle (UI) einen Abmeldebefehl für einen sich abmeldenden Arbeiter zu empfangen, damit dieser von der Arbeit auf dem der Bedienereinheit zugeordneten Gleis abgemeldet wird, und als Reaktion darauf den biometrischen Leser zu aktivieren, um biometrische Daten des sich abmeldenden Arbeiters zu erfassen;
eine Abmeldeanfrage an das Arbeitermanagementmodul zu übermitteln, wobei die Abmeldeanfrage die biometrischen Daten des sich abmeldenden Arbeiters enthält; und
dem Arbeiter über die Benutzerschnittstelle (UI) eine Abmeldebestätigung auszugeben, wenn von dem Arbeitermanagementmodul eine positive Abmeldeantwort empfangen wird, die angibt, dass der Arbeiter von der Arbeit auf dem der Bedienereinheit zugeordneten Gleis abgemeldet ist; und wobei:
das Arbeitermanagementmodul ferner dazu eingerichtet ist:
die Abmeldeanfrage von der Bedienereinheit zu empfangen;
unter Verwendung der in der Abmeldeanfrage enthaltenen biometrischen Daten eine biometrische Erkennungsroutine durchzuführen, durch die bestimmt wird, ob der sich abmeldende Arbeiter zuvor für die Arbeit auf dem der Bedienereinheit zugeordneten Gleis registriert war, und, falls dies der Fall ist: eine positive Abmeldeantwort an die Bedienereinheit zu senden und mit der Listenverwaltungseinrichtung zu kommunizieren, um die Liste der Arbeiter zu aktualisieren und den sich abmeldenden Arbeiter von der Arbeit auf dem Gleis abzumelden.

3. System nach Anspruch 1 oder Anspruch 2, wobei die Bedienereinheit dazu eingerichtet ist, mit der Listenverwaltungseinrichtung zu kommunizieren, um zu bestimmen, ob alle in der Liste der Arbeiter aufgeführten Arbeiter von der Arbeit auf dem der Bedienereinheit zugeordneten Gleis abgemeldet sind, und, falls dies der Fall ist, das Umschalten der mindestens einen Bewegungssteuervorrichtung in eine nicht sichernde Konfiguration zu ermöglichen.

4. System nach einem der vorhergehenden Ansprüche, wobei:
der biometrische Leser der Bedienereinheit eine Kamera umfasst;
die Bedienereinheit dazu eingerichtet ist, den Anmelde- oder Abmeldebefehl zu empfangen und als Reaktion darauf die Kamera zu aktivieren, um ein Bild des sich anmeldenden bzw. abmeldenden Arbeiters aufzunehmen;
die biometrischen Daten Gesichtsdaten umfassen, die aus dem aufgenommenen Bild des sich anmeldenden bzw. abmeldenden Arbeiters abgeleitet sind; und
die biometrische Erkennungsroutine eine Gesichtserkennungsroutine umfasst.

5. System nach Anspruch 4, wobei auf das Bild des sich anmeldenden bzw. abmeldenden Arbeiters eine Verschlüsselungsfunktion angewendet wird, um die daraus abgeleiteten Gesichtsdaten zu erzeugen.

6. System nach Anspruch 5, wobei die Verschlüsselungsfunktion eine Einwegfunktion ist, durch die verhindert wird, dass das Bild des sich anmeldenden bzw. abmeldenden Arbeiters aus den abgeleiteten Gesichtsdaten gewonnen werden kann.

7. System nach einem der Ansprüche 4 bis 6, wobei die Gesichtserkennungsroutine einen Vergleich der Gesichtsdaten eines sich anmeldenden bzw. abmeldenden Arbeiters mit in der Datenbank autorisierter Arbeiter gespeicherten Gesichtsdaten umfasst.

8. System nach einem der vorhergehenden Ansprüche, wobei die Bedienereinheit dazu eingerichtet ist, eine Manager-Anmeldung durchzuführen, wobei die Manager-Anmeldung Arbeitermanagementfunktionen an der Bedienereinheit freischaltet, einschließlich einer Funktion zum Hinzufügen von Arbeitern, bei der:
die Bedienereinheit dazu eingerichtet ist, über die Benutzerschnittstelle (UI) einen Befehl zum Hinzufügen eines Arbeiters zu empfangen, um einen neuen Arbeiter als für die Arbeit auf dem Gleis autorisierten Arbeiter hinzuzufügen, und als Reaktion darauf den biometrischen Leser zu aktivieren, um biometrische Daten des neuen Arbeiters zu erfassen;
eine Anfrage zum Hinzufügen eines neuen Arbeiters an das Arbeitermanagementmodul zu übermitteln, wobei die Anfrage zum Hinzufügen eines neuen Arbeiters die erfassten biometrischen Daten des neuen Arbeiters enthält; und
über die Benutzerschnittstelle (UI) eine Bestätigung über das Hinzufügen des Arbeiters auszugeben, wenn von dem Arbeitermanagementmodul eine positive Antwort auf die Anfrage zum Hinzufügen des Arbeiters empfangen wird, die angibt, dass der neue Arbeiter der Datenbank autorisierter Arbeiter hinzugefügt wurde.

9. System nach einem der vorhergehenden Ansprüche, ferner umfassend eine Fernverwaltungseinheit, wobei die Fernverwaltungseinheit dazu eingerichtet ist, mit mindestens einer der folgenden Komponenten zusammenzuwirken: der Bedienereinheit, dem Arbeitermanagementmodul und der Listenverwaltungseinrichtung, um:
Arbeiter der Datenbank autorisierter Arbeiter hinzuzufügen oder daraus zu entfernen; und/oder
Arbeiter in der Liste der auf einem vorbestimmten Gleis arbeitenden Arbeiter zu registrieren oder aus dieser abzumelden.

10. System nach einem der vorhergehenden Ansprüche, wobei die mindestens eine Bewegungssteuervorrichtung zur Steuerung der Bewegung von Zügen entlang des zugeordneten Gleises Signale zur Signalisierung an einen Triebfahrzeugführer umfasst.

11. System nach einem der vorhergehenden Ansprüche, wobei das System eine Warneinstellung umfasst, in der mindestens eine Warneinrichtung aktiviert wird, um die Arbeiter darüber zu informieren, dass das System von einer sicheren Einstellung in eine unsichere Einstellung umgeschaltet wird, sodass jeder Arbeiter, der sich auf dem Gleis aufhält, das Gleis verlassen muss.

12. System nach einem der vorhergehenden Ansprüche, wobei die mindestens eine Bewegungssteuervorrichtung zur Steuerung der Bewegung von Zügen entlang des zugeordneten Gleises eine elektromechanische Entgleisungsvorrichtung umfasst, wobei die Entgleisungsvorrichtung dazu eingerichtet ist:
Anweisungen von der Bedienereinheit zum Wechsel in eine Sicherungskonfiguration zu empfangen und als Reaktion darauf in eine Position auf dem Gleis gebracht zu werden, in der ein vorbeifahrender Zug entgleisen würde; und
Anweisungen von der Bedienereinheit zum Wechsel in eine nicht sichernde Konfiguration zu empfangen und als Reaktion darauf in eine Position gebracht zu werden, die es einem Zug ermöglicht, das Gleis zu befahren.

13. System nach Anspruch 12, wobei die Entgleisungsvorrichtung einen Positionssensor zur Überwachung ihrer Position relativ zum Gleis umfasst, wobei die Entgleisungsvorrichtung dazu eingerichtet ist, ihre Position an die Bedienereinheit zu melden und dadurch eine Rückmeldung darüber bereitzustellen, ob sich die Entgleisungsvorrichtung in der Sicherungskonfiguration oder der nicht sichernden Konfiguration befindet.

14. System nach Anspruch 12 oder Anspruch 13, wobei die Entgleisungsvorrichtung einen Zuganwesenheitssensor zur Erfassung der Anwesenheit eines die Entgleisungsvorrichtung passierenden Zuges umfasst, wenn sich die Entgleisungsvorrichtung in der nicht sichernden Konfiguration befindet, wobei die Entgleisungsvorrichtung das Umschalten in die Sicherungskonfiguration so lange verzögert, bis der Zug von dem Zuganwesenheitssensor als die Entgleisungsvorrichtung vollständig passiert habend erfasst wurde.

15. Computerimplementiertes Verfahren zur Verbesserung der Sicherheit eines Zugdepots, umfassend:
Empfangen eines Anmeldebefehls für einen sich anmeldenden Arbeiter, damit dieser für Arbeiten auf einem Gleis registriert wird, und als Reaktion darauf Aktivieren eines biometrischen Lesers, um biometrische Daten des sich anmeldenden Arbeiters zu erfassen;
Durchführen einer biometrischen Erkennungsroutine, durch die bestimmt wird, ob der sich anmeldende Arbeiter zur Arbeit auf dem Gleis autorisiert ist, und, falls dies der Fall ist, Aktualisieren einer Liste von Arbeitern, um den sich anmeldenden Arbeiter als auf dem Gleis arbeitend zu registrieren; und
Verhindern eines Umschaltens aus einer sicheren Einstellung, solange nicht alle in der Liste der Arbeiter aufgeführten Arbeiter von der Arbeit auf dem Gleis abgemeldet sind, wobei durch die sichere Einstellung mindestens eine Bewegungssteuervorrichtung in eine Sicherungskonfiguration versetzt wird, in der sie vor Zugbewegungen entlang des Gleises schützt..

## Revendications

1. Système de sécurité pour un dépôt ferroviaire, comprenant :
une unité de commande comprenant un lecteur biométrique et une interface utilisateur (UI), l'unité de commande étant associée à une voie ferrée prédéterminée respective du dépôt de trains, et est configurée pour communiquer avec au moins un dispositif de contrôle de la circulation afin de réguler la circulation des trains sur la voie ferrée associée ;
un module de gestion des travailleurs comprenant une base de données des travailleurs autorisés ; et
un gestionnaire de listes configuré pour tenir à jour une liste des travailleurs inscrits pour travailler sur la voie ferrée ;
dans lequel le système comprend :
un environnement sûr qui permet aux travailleurs d'être présents sur la voie ferrée en toute sécurité, l'unité de commande transmettant des instructions à au moins un dispositif de contrôle de la circulation pour le mettre dans une configuration protectrice qui empêche toute circulation de trains sur la voie ferrée ; et
un environnement dangereux qui oblige les travailleurs à rester à l'écart de la voie ferrée, l'unité d'exploitation transmettant des instructions à au moins un dispositif de contrôle de la circulation pour le mettre dans une configuration non-protectrice qui permet la circulation des trains sur la voie ferrée ;
dans lequel l'unité de commande est configurée pour :
recevoir une commande de connexion, via l'interface utilisateur, pour qu'un travailleur connecté soit enregistré afin de travailler sur la voie ferrée associée à l'unité de commande, et, en réponse, permettre au lecteur biométrique d'obtenir des données biométriques du travailleur connecté ;
transmettre une demande de connexion au module de gestion des travailleurs, la demande de connexion incluant les données biométriques obtenues ; et
confirmer la connexion au travailleur via l'interface utilisateur dès la réception d'une réponse de connexion positive venant du module de gestion des travailleurs qui indique que le travailleur est enregistré et qu'il est autorisé à travailler sur la voie ferrée ;
dans lequel le module de gestion des travailleurs est configuré pour :
recevoir la demande d'ouverture de session de l'unité d'exploitation ;
à l'aide des données biométriques incluses dans la demande de connexion, effectuer une routine de reconnaissance biométrique qui détermine si le travailleur qui se connecte est identifié dans la base de données des travailleurs autorisés comme étant autorisé à travailler sur la voie ferrée associée à l'unité de commande et, si c'est le cas :
envoyer une réponse de connexion positive à l'unité de commande ; et
communiquer avec le gestionnaire de liste pour mettre à jour la liste des travailleurs et inscrire le travailleur qui se connecte comme étant en train de travailler sur la voie ferrée ;
où le système ne peut pas s'éloigner du réglage de sécurité, à moins que tous les travailleurs figurant sur la liste des travailleurs ne soient empêchés de travailler sur la voie ferrée.

2. Le système selon la revendication 1, **caractérisé en ce que** :
l'unité de commande est en outre configurée pour :
recevoir une commande de déconnexion, via l'interface utilisateur, pour qu'un travailleur qui se déconnecte ne soit plus autorisé à travailler sur la voie ferrée associée à l'unité de commande, et, en réponse, permettre au lecteur biométrique d'obtenir des données biométriques du travailleur en train de se déconnecter ;
transmettre une demande de déconnexion au module de gestion des travailleurs, la demande de déconnexion incluant les données biométriques du travailleur qui se déconnecte ;
confirmer la déconnexion au travailleur via l'interface utilisateur dès la réception d'une réponse positive de déconnexion venant du module de gestion des travailleurs qui indique que le travailleur n'est pas autorisé à travailler sur la voie ferrée associée à l'unité de commande, et dans laquelle :
le module de gestion des travailleurs est en outre configuré pour :
recevoir la demande de déconnexion de l'unité de commande ;
à l'aide des données biométriques incluses dans la demande de déconnexion, effectuer une routine de reconnaissance biométrique qui détermine si le travailleur en train de se déconnecter était déjà inscrit pour travailler sur la voie ferrée associée à l'unité de commande et, si c'est le cas, envoyer une réponse positive de déconnexion à l'unité de commande et communiquer avec le gestionnaire de la liste pour mettre à jour la liste des travailleurs et retirer le travailleur en train de se déconnecter de la liste d'autorisation de travail sur la voie ferrée.

3. Le système selon l'une quelconque des revendications 1 et 2, **caractérisé en ce que** l'unité de commande est configurée pour : communiquer avec le gestionnaire de liste pour déterminer si tous les travailleurs de la liste des travailleurs ne sont pas autorisés à travailler sur la voie ferrée associée à l'unité de commande, et, si c'est le cas, permettre le basculement du dispositif de contrôle de la circulation dans une configuration non-protectrice.

4. Le système selon l'une quelconque des revendications précédentes, dans lequel :
le lecteur biométrique de l'unité de commande comprend une caméra ;
l'unité de commande étant configurée pour recevoir la commande de connexion ou de déconnexion, et, en réponse, permettre à la caméra de capturer une image du travailleur en train de se connecter ou de se déconnecter ;
les données biométriques comprenant des données faciales dérivées de l'image capturée du travailleur qui se connecte ou se déconnecte ; et
la routine de reconnaissance biométrique comprenant une routine de reconnaissance faciale.

5. Le système selon la revendication 4, **caractérisé en ce qu'**une fonction de chiffrement est appliquée à l'image du travailleur qui se connecte ou se déconnecte pour générer les données faciales dérivées.

6. Le système selon la revendication 5, **caractérisé en ce que** la fonction de chiffrement est une fonction unidirectionnelle, ce qui empêche d'obtenir l'image du travailleur qui se connecte ou se déconnecte à partir des données faciales dérivées.

7. Le système selon l'une quelconque des revendications 4 à 6, **caractérisé en ce que** la routine de reconnaissance faciale consiste à comparer les données faciales d'un travailleur qui se connecte ou se déconnecte avec les données faciales stockées dans la base de données des travailleurs autorisés.

8. Le système selon l'une quelconque des revendications précédentes, **caractérisé en ce que** l'unité de commande est configurée pour permettre la connexion d'un gestionnaire, cette connexion activant les fonctions de gestion des travailleurs sur l'unité de commande, y compris une fonction d'ajout de travailleur dans laquelle :
l'unité de commande est configurée pour recevoir une commande d'ajout de travailleurs, via l'interface utilisateur, afin qu'un nouveau travailleur soit ajouté en tant que travailleur autorisé pour la voie ferrée, et pour permettre, en réponse, au lecteur biométrique d'obtenir des données biométriques du nouveau travailleur ;
transmettre une nouvelle demande d'ajout de travailleur au module de gestion des travailleurs, la nouvelle demande d'ajout de travailleur incluant les données biométriques du nouveau travailleur obtenues ;
confirmer l'ajout de travailleur via l'interface utilisateur dès la réception d'une réponse positive d'ajout de travailleur venant du module de gestion des travailleurs qui indique que le nouveau travailleur a été ajouté à la base de données des travailleurs autorisés.

9. Le système selon l'une quelconque des revendications précédentes, **caractérisé en ce qu'**il comprend en outre une unité de gestion à distance, celle-ci étant configurée pour communiquer avec au moins l'une des unités de commande, le module de gestion des travailleurs et le gestionnaire de listes pour :
ajouter ou supprimer des travailleurs de la base de données des travailleurs autorisés ; et/ou
inscrire ou enlever des travailleurs de la liste des travailleurs travaillant sur une voie ferrée prédéterminée.

10. Le système selon l'une quelconque des revendications précédentes, **caractérisé en ce que** le dispositif de contrôle de la circulation, destiné au contrôle de la circulation des trains sur la voie ferrée associée, comprend des signaux servant à avertir un conducteur de train.

11. Le système selon l'une quelconque des revendications précédentes, **caractérisé en ce qu'**il comprend un réglage d'avertissement dans lequel au moins un dispositif d'avertissement est activé pour informer les travailleurs que le système passera d'un réglage sécurisé à un réglage non sécurisé, afin que tout travailleur présent sur la voie ferrée soit obligé de la quitter.

12. Le système selon l'une quelconque des revendications précédentes, **caractérisé en ce que** le dispositif de commande de la circulation pour contrôler la circulation des trains sur la route voie ferré associée comprend un dérailleur électromécanique, celui-ci étant configuré pour :
recevoir des instructions de l'unité de commande pour passer en configuration protectrice et, en réponse, adopter une position sur la voie ferrée qui ferait dérailler un train en passage ; et
recevoir des instructions de l'unité de commande pour entrer dans une configuration non protectrice et, en réponse, passer à une position qui permet à un train de traverser la voie ferrée.

13. Le système selon la revendication 12, **caractérisé en ce que** le dérailleur comprend un capteur de position pour surveiller sa position par rapport à la voie ferrée, le dérailleur étant configuré pour signaler sa position à l'unité de commande, fournissant ainsi une rétroaction pour déterminer si le dérailleur est en configuration protectrice ou non.

14. Le système selon la revendication 12 ou 13, **caractérisé en ce que** le dérailleur comprend un capteur de présence de trains destiné à détecter la présence d'un train en passage devant le dérailleur lorsqu'il est en configuration non-protectrice, le dérailleur retardant le basculement en configuration protectrice jusqu'à ce que le capteur de présence de trains détecte que le train a fini de franchir le dérailleur.

15. Une méthode mise en œuvre par ordinateur visant à améliorer la sécurité d'un dépôt de trains, comprenant :
la réception d'une commande de connexion pour qu'un travailleur qui se connecte soit enregistré et autorisé à travailler sur une voie ferrée et, en réponse, permettre à un lecteur biométrique d'obtenir des données biométriques du travailleur en train de se connecter ;
effectuer une routine de reconnaissance biométrique qui détermine si le travailleur connecté est autorisé à travailler sur la voie ferrée et, si c'est le cas, mettre à jour une liste de travailleurs pour enregistrer le travailleur qui se connecte comme étant en train de travailler sur la voie ferrée ;
empêcher l'abandon d'un environnement sécurisé, à moins que tous les travailleurs figurant sur la liste des travailleurs ne soient empêchés de travailler sur la voie ferrée, l'environnement de sécurité mettant au moins un dispositif de contrôle de la circulation dans une configuration protectrice qui empêche la circulation de trains sur la voie ferrée.
